(19) **Europäisches Patentamt**

**European Patent Office**

**Office européen des brevets**

(11) **EP 0 599 402 B1**

(12) **FASCICULE DE BREVET EUROPEEN**

| | |
|---|---|
| (45) Date de publication et mention de la délivrance du brevet:<br>**10.10.2001 Bulletin 2001/41** | (51) Int Cl.[7]: **H04B 3/23** |

(21) Numéro de dépôt: **93203217.0**

(22) Date de dépôt: **17.11.1993**

(54) **Dispositif d'annulation d'écho, système et poste de télécommunication comportant un tel dispositif**

Echokompensator, Nachrichtenübertragungssystem und Station mit solch einem Echokompensator

Echo canceller, telecommunication system and station with such an echo canceller

(84) Etats contractants désignés:
**CH DE FR GB IT LI**

(30) Priorité: **25.11.1992 FR 9214187**

(43) Date de publication de la demande:
**01.06.1994 Bulletin 1994/22**

(73) Titulaire: **Koninklijke Philips Electronics N.V.**
**5621 BA Eindhoven (NL)**

(72) Inventeur: **Kerguiduff, Marianne**
**F-75008 Paris (FR)**

(74) Mandataire: **Chaffraix, Jean et al**
**Société Civile S.P.I.D.**
**156, Boulevard Haussmann**
**75008 Paris (FR)**

(56) Documents cités:
**WO-A-92/17004**

- **IEEE TRANSACTIONS ON COMMUNICATION TECHNOLOGY vol. COM35, no. 10, Octobre 1985, NEW YORK US pages 1102 - 1108 KANEMASA 'An Adaptive-Step Sign Algorithm for Fast Convergence of a Data Echo Canceller'**

## Description

La présente invention concerne un dispositif d'annulation d'écho présent dans un signal d'entrée se présentant sous forme de données transmises représentant l'instant considéré, dispositif comprenant, pour effectuer différentes opérations :

- un filtre adaptatif pour engendrer, à partir desdites données, une réplique dudit écho en effectuant une somme pondérée, avec des coefficients de pondération avec différentes données retardées par un multiple K d'un temps T,
- un organe de soustraction pour enlever au signal d'entrée ladite réplique,
- un organe de calcul pour déterminer de nouvelles valeurs d'au moins un coefficient de pondération à partir de sa valeur originale en apportant des valeurs de correction.

L'invention concerne aussi un système de transmission et poste de télécommunications comportant un tel dispositif d'annulation d'écho et également un procédé d'annulation d'écho.

De tels dispositifs sont bien connus et trouvent d'importantes applications dans le domaine des transmissions téléphoniques et de la transmission de données. Les échos sont le plus souvent dus aux désadaptations provoquées par les passages deux fils-quatre fils disposés entre un interlocuteur proche et un interlocuteur lointain. Dans le domaine des transmissions téléphoniques plus l'écho est lointain plus il est gênant. Cet effet de lointain est accru dans les systèmes téléphoniques numériques qui peuvent introduire des retards supplémentaires par le fait qu'un certain temps est consacré à la mise en paquets de la parole.

Pour régler les coefficients de pondération, on utilise souvent la méthode du signe. Cette méthode est décrite notamment au paragraphe IV.7 de l'ouvrage de M. BELLANGER intitulé : "ANALYSE DES SIGNAUX ET FILTRAGE NUMERIQUE ADAPTATIF", édité en 1989 par les éditions MASSON à PARIS. Cette méthode, s'accommodant des signaux non stationnaires, tels que les signaux de paroles, présente cependant quelques inconvénients.

Cette méthode corrige les coefficients en leur ajoutant ou en leur retranchant une quantité fixe. Soit cette valeur est faible et la convergence des coefficients vers la valeur optimale est lente soit cette valeur est forte et alors on risque l'instabilité.

Il est à noter que des dispositifs d'annulation d'écho sont décrits dans le document de brevet WO-A 92/17004 et dans la publication IEEE Transactions on Communication Technology, vol.COM35, No.10, Octobre 1987, New York US, pages 1102-1108 : 'An Adaptive Step Sign Algorithm for Fast Convergence of a Data Echo Canceller' par A. KANEMASA et K.Niwa. Leur convergence présente aussi les inconvénients précités.

La présente invention propose un système du genre mentionné dans le préambule qui atténue dans une large mesure les inconvénients des dispositifs qui utilisent la méthode précitée.

La présente invention propose aussi un poste de télécommunication, un dispositif d'annulation d'écho, ainsi qu'un procédé mis en oeuvre dans un tel dispositif.

Pour cela, un tel système est remarquable en ce que l'organe de calcul comporte :

- des premiers moyens de multiplication pour effectuer une multiplication de la valeur du coefficient avec un terme de correction pour déterminer la valeur de correction.

La description suivante, accompagnée des dessins ci-annexés, le tout donné à titre d'exemple non limitatif, fera bien comprendre comment l'invention peut être réalisée.

La figure 1      représente un schéma de principe de l'invention.
La figure 2      représente le schéma d'un synthétiseur d'écho utilisé par le dispositif de l'invention.
La figure 3      représente un schéma de réalisation d'un dispositif de l'invention.
Les figures 4 à 6      représentent l'organigramme de fonctionnement du dispositif de la figure 3.

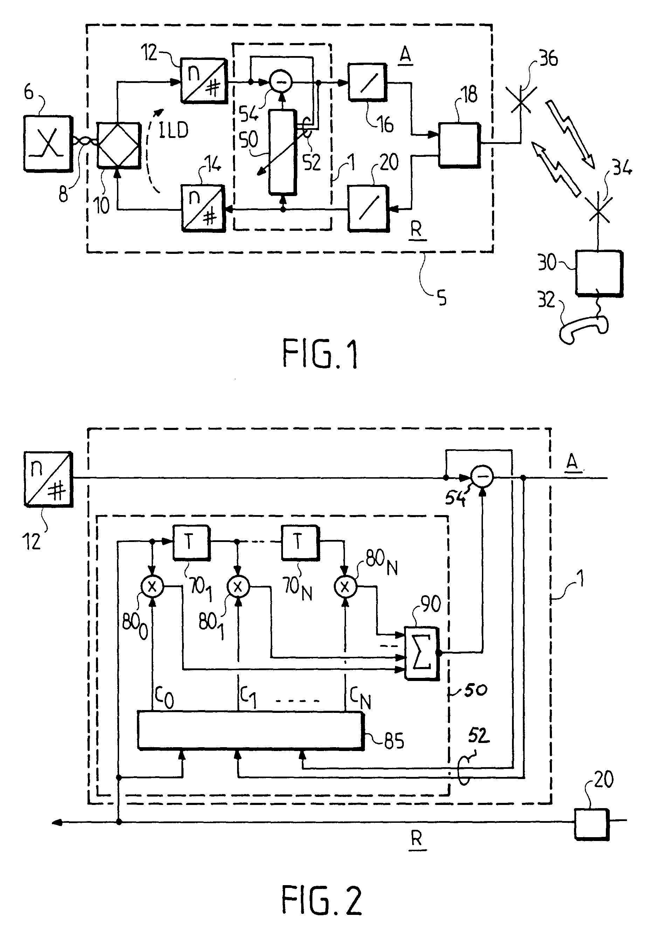

A la figure 1, le dispositif annuleur d'écho porte la référence 1. Dans le cadre de l'exemple décrit, cet annuleur est inséré dans la partie fixe 5 d'une installation DECT qui est un système défini par l'ETSI comme un système de téléphone sans cordon (voir la contribution ETS 300 175-8).

La référence 6 indique un centre de commutation de l'office des postes et la référence 8, une sortie filaire à deux fils. La partie fixe 5 de l'installation DECT se raccorde au centre de commutation 6 par l'intermédiaire d'un transformateur hybride 10 qui sépare la voie aller A de la voie retour R. Dans chacune de ces voies, on a disposé respectivement un convertisseur analogique-numérique 12 et un convertisseur numérique-analogique 14 ; ces convertisseurs travaillent sur des échantillons numériques linéaires, c'est-à-dire qu'ils codent d'une manière linéaire la grandeur analogique qu'ils représentent de sorte que le dispositif annuleur d'écho 1 travaille sur des échantillons numériques linéaires. Un convertisseur de code 16, inséré dans la voie aller A transforme ce code linéaire en un code différentiel plus apte à être traité par une partie radio 18 de l'installation 5. Un convertisseur 20 effectue l'opération inverse dans la voie retour R.

L'installation DECT comporte aussi une partie mobile 30 à laquelle est rattaché un combiné d'abonné 32. Deux antennes 34 et 36 affectées respectivement aux parties mobiles et fixe, permettent les liaisons radio pour l'échange d'informations entre les deux parties.

Le dispositif annuleur d'écho 1 est représenté schématiquement par un synthétiseur d'écho 50 muni d'une commande de réglage 52 et d'un organe de soustraction 54 qui soustrait, à l'instant "i" un signal d'écho synthétisé r'(i) du signal fourni par le convertisseur 12. Ce signal r'(i) a pour but d'annuler le signal d'écho r(i) provoqué notamment par le transformateur hybride 10. L'effet gênant de cet écho est amplifié par les temps de retard apportés par les parties fixes et mobiles. Le réglage du synthétiseur est donc fait, de façon à annuler le plus possible, à la sortie de l'organe 54, le signal r(i).

La figure 2 montre un schéma fonctionnel du dispositif annuleur d'écho 1 et aussi du synthétiseur d'écho 50. Ce dernier est formé d'une succession d'éléments de retard $70_1$, ..., $70_N$ qui amènent chacun pour les échantillons fournis par le convertisseur 12, un retard de valeur T correspondant à leur cadence d'apparition. Différents organes de multiplication $80_0$, $80_1$, ..., $80_N$ multiplient respectivement par $c_0$, $c_1$, ..., $c_N$ l'échantillon à l'entrée de l'organe $70_1$ et les différents échantillons à la sortie des autres organes ..., $70_N$. C'est un organe de calcul 85 qui détermine ces coefficients $c_0$, $c_1$, ..., $c_N$ à partir du signal de sortie de l'organe de soustraction 54. Les signaux de sortie des convertisseurs 12 et 20 sont aussi utilisés mais à un degré moins fondamental pour le réglage de ces coefficients. Un organe de sommation 90 fournit l'écho synthétisé en faisant l'addition de tous les résultats élaborés par les différents organes de multiplication $80_0$, $80_1$, ..., $80_N$.

Selon l'invention, pour déterminer ces différents coefficients $c_0$, $c_1$, ..., $c_N$, l'organe de calcul 85 opère de la manière suivante :

l'organe de sommation 90 fournit l'écho synthétisé r' :

$$r' = \sum_{k=0}^{N} x(i-k).c_k(i) \qquad (1)$$

les coefficients $c_k(i)$ sont donnés par :

$$c_k(i+1) = c_k(i)(1 + d.\,\text{sign}[x(i-k).u(i)]) \qquad (2)$$

dans cette formule :

la fonction sign [..] prend la valeur "+1" ou "-1" selon le signe de l'argument.

$$u(i) = y(i) + r(i) - r'(i)$$

$d = 2^{-m}$ où m est un entier.

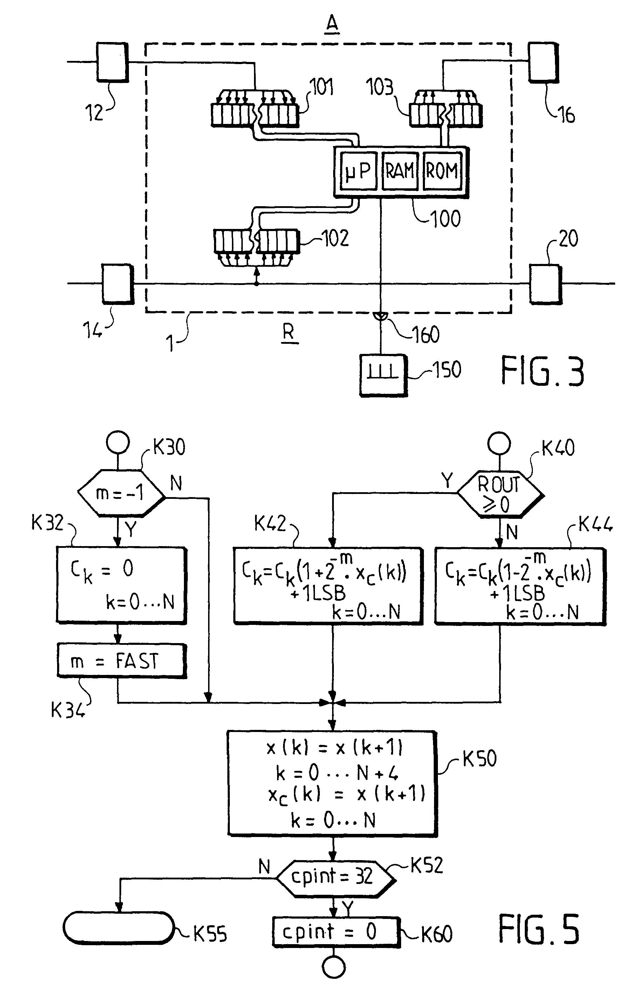

La figure 3 montre un schéma de réalisation d'un dispositif de l'invention. Ce dispositif est bâti autour d'un ensemble à microprocesseur 100 constitué d'un microprocesseur proprement dit, d'une mémoire vive pour contenir différentes données intermédiaires notamment et aussi d'une mémoire morte pour contenir, entre autres, le programme de fonctionnement. Cet ensemble peut être élaboré à partir d'un processeur de signal genre TMS320. Sur le schéma de la figure 3 on a fait figurer d'une manière détachée différents ports d'accès reliés à des registres 101, 102 et 103 nécessaires au fonctionnement du dispositif 1 alors que ces registres sont en fait incorporés dans le même boîtier. Le registre 101 est destiné à recevoir les échantillons fournis par le convertisseur 12, le registre 102 est destiné à recevoir les échantillons fournis par le convertisseur 20 et le registre 103 à contenir les échantillons pour le convertisseur 16. La référence 150 est une horloge fournissant des signaux à la fréquence des échantillons : 1/T. Cette horloge est reliée à une entrée d'interruption 160 pour qu'un programme d'interruption puisse se dérouler pour chaque échantillon.

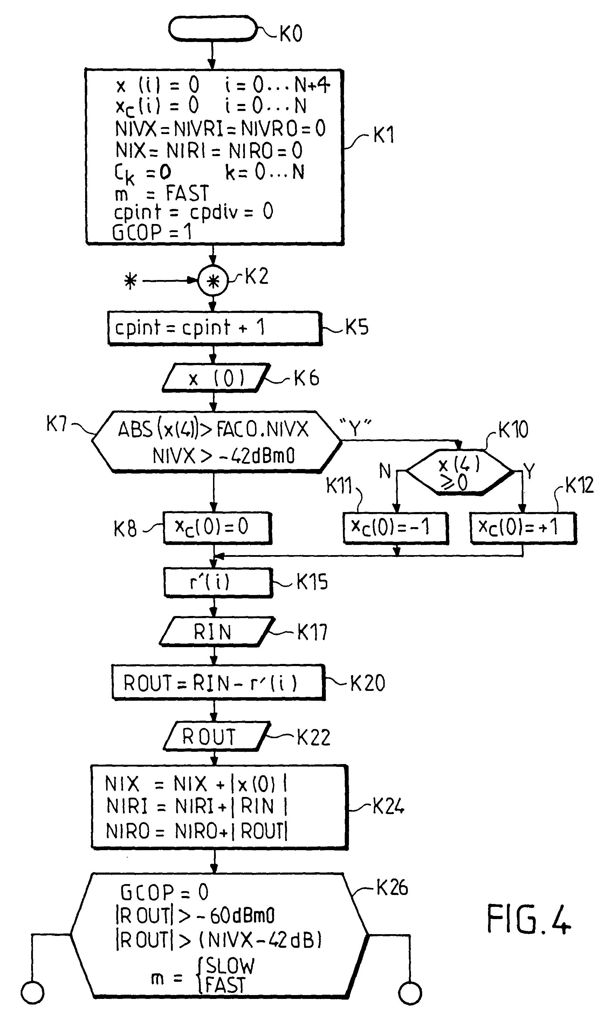

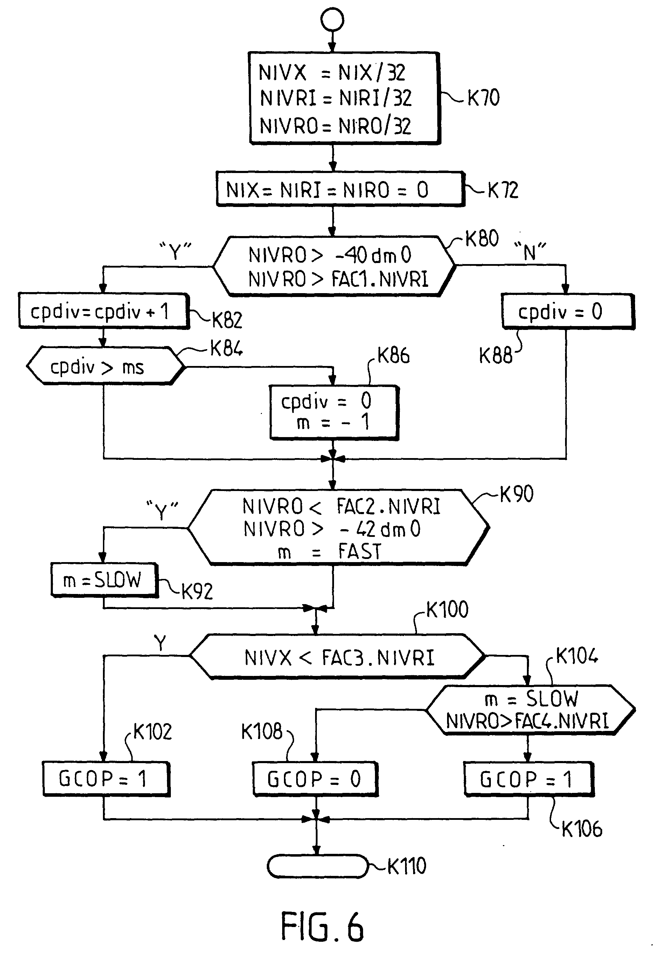

La figure 4 représente une partie de l'organigramme de fonctionnement du dispositif de l'invention. La case K0 représente le début du programme. La case K1 est une phase d'initialisation où différentes variables vont recevoir leur valeur initiale. Pour que le reste du programme puisse se dérouler il faut qu'un signal d'interruption fourni par l'horloge 150 surgisse, ceci est indiqué à la case K2. La case K5 indique l'incrémentation du contenu d'un compteur "cpint" d'interruptions, puis à la case K6 on lit la valeur x(0), cette valeur x(0) est contenue dans le registre 102. A la case K7 on teste la valeur de l'amplitude de x(4) par rapport à une valeur de niveau NIVX. Il convient de bien remarquer que les échantillons x(0), x(1), x(2), x(3) ne sont pas concernés par la suite du traitement. Ces 4 échantillons correspondent aux retards d'apparition de l'écho. Le traitement commence donc en examinant le niveau du signal x(4). On examine si l'amplitude de ce signal x(4) en valeur absolue dépasse d'un certain facteur FAC0 le niveau NIVX. D'autre part on examine si ce niveau NIVX est supérieur à - 42 dBmO. Ces deux conditions sont représentées à la case K7. Si celles-ci ne sont pas respectées on affecte une variable $x_c(0)$ à la valeur 0, si ces conditions sont respectées on prend la branche Y test de la case K7 pour examiner la valeur de x(4) à la case K10. Si la valeur de x(4) est supérieure à 0, on prend la branche Y et on affecte la valeur + 1 à la valeur $x_c(0)$. Si cette valeur est négative on affecte, case K11, la valeur - 1 à la variable $x_c(0)$. Ainsi, on a déjà commencé à évaluer la fonction signe. Des cases K8, K11 et K12, on passe à la case K15 où l'écho synthétisé r'(i) est évalué selon la formule (1). La case K17 indique la lecture d'une variable RIN, cette variable est contenue dans le registre 101, de sorte qu'il est possible à la case K20 d'évaluer une quantité ROUT représentant le signal auquel on a supprimé l'écho. La formule indiquée à la case K20 est à rapprocher de la formule (3). Puis, la valeur ROUT ainsi calculée est placée dans le registre 103. Ceci est indiqué à la case K22. Puis, à la case K24 on met à jour différentes variables relatives aux niveaux des signaux définis par les contenus des registres 101, 102 et 103, NIX, NIRI, NIRD. La case K26 qui suit est l'examen de différentes conditions : on examine si un drapeau GCOP est égal à 0, si la valeur absolue du signal ROUT est supérieure à - 60 dBmO, si cette valeur est supérieure au NIVX - 42 dB et si "m" a l'une des deux valeurs SLOW ou FAST. Si ces conditions ne sont pas respectées on passe à la case K30 de la figure 5.

Cette case K30 indique un test sur la valeur de m. Cette valeur m a deux fonctions : une première fonction est de contenir la valeur d'un paramètre de convergence SLOW ou FAST, et la deuxième fonction, (m prend la valeur - 1) est d'indiquer une divergence de l'algorithme. Si cette valeur est égale à - 1, il y a donc divergence, on passe à la case K32 où les valeurs de $c_k$ sont mises à 0. Puis à la case K34 la valeur de "m" prend la valeur FAST pour que la convergence de la formule (2) soit plus rapide. Si les conditions indiquées à la case K26 sont respectées on passe à la case K40 de la figure 5. La case K40 indique un test sur la valeur de ROUT. Si cette valeur est positive on prend la branche Y pour aller à la case K42. Là, la valeur des coefficients $c_k$ est modifiée avec une valeur de signe "+", soit + $2^{-m}$, ... Si cette valeur est négative on va à la case K44 où la valeur $c_k$ est corrigée avec une valeur négative "-" : $2^{-m}$ ... On remarquera qu'une valeur faible égale à l'élément binaire de plus faible poids (LSB) a été ajoutée systématiquement ; cela, afin d'assurer l'évolution des coefficients. Une fois que les opérations indiquées à l'une des cases K34, K42 et K44 sont effectuées, on passe à la case K50. La case K50 indique l'opération de décalage des différents échantillons x(k) où k varie de 0 à N + 4 et le décalage de valeurs de signes associées $x_c(k)$ où k varie de 0 à N. On passe ensuite à la case K52 où le nombre d'interruptions est compté. Si ce chiffre n'est pas égal à 32 on prend la branche N pour aller à la case K55 qui indique la fin du programme d'interruption. Si cette valeur est égale à 32 on prend la branche Y pour aller à la case K60. Autrement dit les opérations qui suivent sont exécutées une fois sur 32 interruptions déclenchées. Cette case K60 réinitialise le comptage d'interruptions "cpint" à 0. La suite du traitement est montrée à la figure 6.

La case K70 de la figure 6 montre une mise à jour des différents niveaux NIVX, NIVRI, NIVRO. La case K72 réinitialise différentes valeurs NIX, NIRI et NIRO utilisées pour la mise à jour des niveaux précédents. Ensuite, on passe à la case K80. Cette case K80 indique des tests qui montrent l'éventualité d'une divergence de l'algorithme. On teste tout d'abord NIVRO par rapport à un niveau de - 40 dBmO, on teste aussi ce niveau pour voir s'il est supérieur d'un facteur FAC1 au niveau NIVRI. Si ces conditions sont respectées il y a donc une tendance à la divergence. On prend la branche Y pour aller à la case K82. Ici un compteur de divergence "cpdiv" est incrémenté d'une unité. On compare, case K84 le contenu de ce compteur à une certaine valeur "ms" correspondant à un temps de quelques millisecondes. Si ce contenu excède la valeur "ms" il y a donc divergence. Le compteur de divergence est mis à 0 et "m" est mis à - 1 pour indiquer qu'il y a divergence et cette valeur sera utilisée au prochain appel de l'interruption. Si les conditions indiquées à la case K80 ne sont pas respectées on prend la branche N pour aller à la case K88 où le compteur de divergence "cpdiv" est mis à 0. Les tests de la case K90 sont relatifs à la détection du début de convergence de l'algorithme. Ceci est représenté à la case K90 où l'on examine le cas où NIVRO est supérieur d'un facteur FAC2 au niveau NIVRI. On examine si ce niveau NIVRO est supérieur à - 42 dBmO et on examine aussi si le facteur "m" est égal à FAST. Si les conditions de la case K90 sont respectées alors "m" prend la valeur SLOW case K92. Si ces conditions de la case K90 ne sont pas respectées on passe alors à la case K100. On passe aussi à la case K100 une fois que l'affectation indiquée à la case K92 a été faite. Si l'abonné parle dans le combiné 32 (c'est le cas de la double parole), il va de soi que l'annuleur d'écho peut être mis en défaut par les signaux provoqués par cet abonné. Il convient donc de détecter cette condition (voir case K100). Si le test de la case K100 est satisfaisant on passe à la case K102 où l'on met le drapeau GCOP à la valeur 1. Si ce test n'est pas satisfaisant on passe à la case K104 où deux conditions sont vérifiées ; la première : est-ce que m a la valeur SLOW, la deuxième : est-ce que NIVRO est supérieur d'un facteur FAC4 à la valeur NIVRI. Si oui, le drapeau GCOP prend la valeur 1 case K106. Sinon, le drapeau GCOP prend la valeur 0 case K108. Ainsi, le programme se termine à la case K110.

Les facteurs FAC0, FAC1, FAC2, FAC3 et FAC4 sont choisis de sorte qu'ils correspondent aux valeurs ci-dessous :

| FAC0 | 0 dB |
|------|------|
| FAC1 | + 1 dB |
| FAC2 | - 12 dB |
| FAC3 | + 6 dB |
| FAC4 | - 9 dB |

## Revendications

1. Dispositif d'annulation d'écho pour enlever un signal d'écho présent dans un signal d'entrée se présentant sous forme de données transmises x(i), i représentant l'instant considéré, dispositif comprenant, pour effectuer différentes opérations :

   - un filtre adaptatif (50) pour engendrer, à partir desdites données, une réplique dudit écho en effectuant une somme pondérée, avec des coefficients de pondération ($C_0$, $C_1$,..$C_N$) avec différentes données retardées x(i-KT) par un multiple K d'un temps T,
   - un organe de soustraction (50) pour enlever au signal d'entrée ladite réplique,
   - un organe de calcul (85) pour déterminer de nouvelles valeurs d'au moins un coefficient de pondération à partir de sa valeur originale en apportant des valeurs de correction, **caractérisé en ce que** l'organe de calcul comporte des moyens de multiplication pour déterminer la valeur de correction par multiplication de la corrélation entre la valeur de la donnée retardée et la différence du signal d'entrée et de la réplique.

2. Dispositif d'annulation d'écho selon la revendication 1, **caractérisé en ce que** l'organe de calcul effectue l'opération suivante pour au moins un des coefficients de pondération :

$$c_k(i+1) = c_k(i) \ (1 + d. \ sign[x(i-k).u(i)])$$

   dans cette formule :

   | | |
   |---|---|
   | la fonction sign[..] | prend la valeur «+1» ou «-1» selon le signe de l'argument, |
   | u(i) | est une fonction de l'erreur entre l'écho réel et l'écho estimé, |
   | d | est une constante, |
   | k | est une valeur définissant chacun des coefficients allant de 0 à N. |

3. Dispositif selon la revendication 1 ou 2, **caractérisé en ce qu'**une valeur de proportionnalité (d) dans ce terme de correction est égale à $2^{-m}$ où m est un entier.

4. Dispositif selon l'une des revendications 1 à 3, **caractérisé en ce qu'**il est formé à partir d'un processeur de signal (100) muni de registres (101, 102, 103) pour se connecter aux accès portant le signal d'entrée et portant les données transmises et d'une entrée (160) pour recevoir un signal d'interruption, reliée à une horloge d'interruption (150) pour déclencher notamment la mise en oeuvre desdites opérations.

5. Dispositif selon la revendication 3, **caractérisé en ce que** la valeur "m" peut prendre une valeur de mise en route et une valeur de fonctionnement, **en ce qu'**il est prévu des moyens d'analyse de convergence pour donner à la valeur « m » la valeur de fonctionnement lorsqu'une convergence a été détectée et la valeur de mise en route lorsqu'une divergence a été détectée.

6. Dispositif selon l'une des revendications 1 à 5, **caractérisé en ce qu'**il comporte des moyens pour analyser les différents niveaux de signaux disponibles pour modifier des paramètres desdites opérations.

7. Dispositif selon la revendication 6, **caractérisé en ce qu'**il comporte des moyens de détection de double parole coopérant avec lesdits moyens pour analyser les niveaux, pour stopper l'évolution des coefficients de pondération lorsque des signaux auxdits accès ont un niveau perturbateur.

8.  Dispositif selon l'une des revendications 6 ou 7 dans lequel ledit processeur de signal est muni d'une entrée pour signal d'interruption, **caractérisé en ce que** les analyses de niveaux sont effectuées pour certaines interruptions déclenchées au niveau dudit processeur de signal.

9.  Système de transmission comprenant un premier poste (5) lié à un deuxième poste (30-32) par un canal de transmission, lesdits postes étant formés par un récepteur et un émetteur, système dans lequel au moins un des postes est muni d'un dispositif d'annulation d'écho (1) selon l'une des revendications 1 à 8.

10. Poste de télécommunication muni d'un émetteur et d'un récepteur muni d'un dispositif d'annulation d'écho (1) selon l'une des revendications 1 à 8.

11. Procédé mis en oeuvre dans un dispositif d'annulation d'écho, dans lequel l'écho est synthétisé par une somme de différentes données retardées et pondérées par des coefficients de pondération, comportant des étapes de :

    -   détermination d'un signal d'erreur entre l'écho réel et l'écho synthétisé,
    -   élaboration d'un terme de correction des coefficients de pondération faisant intervenir ledit signal d'erreur, **caractérisé en ce que** lesdits coefficients de pondération sont corrigés d'une quantité obtenue par multiplication de la corrélation entre la valeur de la donnée retardée et la différence du signal d'entrée et de la réplique.

**Claims**

1.  An echo cancellation device for removing an echo signal that is present in an input signal in the form of transmitted data x(i), where i represents the instant under consideration, the echo cancellation device including for carrying out various operations:

    -   an adaptive filter (50) for generating a replica of said echo on the basis of said data by producing a weighted sum, with weight factors ($C_0$, $C_1$, ..., $C_N$) with various delayed data (x(I-KT) delayed by a multiple K of a time period T,
    -   a subtractor element (50) for removing said replica from said input signal,
    -   a calculation element (85) for determining new values of at least one weight factor based on its original value by providing correction values,

    **characterized in that** the calculation element includes multiplication means to determine the correction value by multiplying the correlation between the value of the delayed data and the difference between the input signal and the replica.

2.  An echo cancellation device as claimed in claim 1, **characterized in that** the calculation element performs the following operation for at least one of the weight factors:

$$c_k(I+1) = c_k(I)(1 + d.sign[x(i-k).u(i)])$$

    in which formula:

    the function sign[...] adopts the value +1 or -1 depending on the sign of the argument,
    u(i) is a function of the error between the real echo and the estimated echo,
    d is a constant,
    k is a value defining each of the factors running from 0 to N.

3.  A device as claimed in claim 1 or 2, **characterized in that** a proportionality factor (d) in this correction term is equal to $2^{-m}$ where m is an integer.

4.  A device as claimed in one of the claims 1 to 3, **characterized in that** it is formed by a signal processor (100) including registers (101, 102, 103) for being connected to the access points that carry the input signal and carry the transmitted data and to an input (160) for receiving an interrupt signal, connected to an interrupt clock (150) for triggering notably the running of said operations.

5. A device as claimed in claim 3, **characterized in that** the value "m" may adopt a start value and an operation value, and **in that** convergence analysis means are provided for giving to the value "m" the operation value when a convergence has been detected and the start value when a divergence has been detected.

6. A device as claimed in one of the claims 1 to 5, **characterized in that** it comprises means for analysing the various levels of signals which are available for modifying parameters of said operations.

7. A device as claimed in claim 6, **characterized in that** it comprises double speech detection means co-operating with said means for analysing the levels, to stop the evolution of weight factors when signals on said accesses have a disturbing level.

8. A device as claimed in claim 6 or 7 in which said signal processor has an input for the interrupt signal, **characterized in that** the level analyses are carried out for certain interruptions occurring at the level of said signal processor.

9. A transmission system comprising a first station (5) connected to a second station (30-32) by a transmission channel, said stations comprising a transmitter and a receiver, in which system at least one of the stations includes an echo cancellation device (1) as claimed in one of the claims 1 to 8.

10. A telecommunication station comprising a transmitter and a receiver which include an echo cancellation device (1) as claimed in one of the claims 1 to 8.

11. A method implemented in an echo cancellation device, in which the echo is synthesized by a sum of various delayed data weighted with weight factors, comprising steps of

- determining an error signal between the real echo and the synthesized echo,
- drafting a correction term of the weight factors that make the error signal occur,

**characterized in that** said weight factors are corrected by a quantity obtained by multiplication of the correlation between the value of the delayed data and the difference between the input signal and the replica.

### Patentansprüche

1. Echokompensator zum kompensieren eines Echosignals, vorhanden in einem Eingangssignal, das in Form von übertragenen Daten x(i) auftritt, wobei i den berücksichtigten Zeitpunkt darstellt und der Kompensator zur Durchführung verschiedener Vorgänge enthält:

- einen adaptiven Filter (50), um anhand der besagten Daten eine Replik des besagten Echos durch die Bildung einer bewerteten Summe mit Bewertungskoeffizienten ($C_0$, $C_1$,...$C_N$) mit verschiedenen Daten zu erzeugen, verzögert x(i-KT) durch ein Vielfaches von K einer Zeit T,
- ein Subtraktionsorgan (50), um dem Eingangssignal die besagte Replik zu entnehmen,
- ein Rechenorgan (85), um neue Werte mindestens eines Bewertungskoeffizienten anhand seines Originalwerts durch das Einbringen von Korrekturwerten zu bestimmen,

**dadurch gekennzeichnet, daß** das Rechenorgan Multiplikationsmittel enthält, um den Korrekturwert durch Multiplikation der Korrelation zwischen dem verzögerten Datenwert mit der Differenz zwischen dem Eingangssignal und der Replik zu bestimmen.

2. Echokompensator nach Anspruch 1, **dadurch gekennzeichnet, daß** das Rechenorgan folgende Operation für mindestens einen der Bewertungskoeffizienten ausführt:

$$c_k(i+1) = c_k(i) \ (1 + d. \ \text{sign}[x(i-k).u(i)]),$$

in dieser Formel:

hat die Funktion sign [..] den Wert "+1" oder "-1" entsprechend dem Vorzeichen des Arguments.
ist u(i) eine Fehlerfunktion zwischen dem reellen Echo und dem bewerteten Echo,

ist d eine Konstante,

ist k ein Wert zur Definition jedes Koeffizienten, von 0 bis N reichend.

3. Kompensator nach Anspruch 1 oder 2, **dadurch gekennzeichnet, daß** ein Verhältniswert (d) in diesem Korrelationsausdruck gleich $2^{-m}$ ist, wobei m eine Ganzzahl ist.

4. Kompensator nach einem der Ansprüche 1 bis 3, **dadurch gekennzeichnet, daß** er um einen Signalprozessor (100) aufgebaut ist, versehen mit Registern (101, 102, 103), um ihn an die Eingänge anzuschließen, die das Eingangssignals enthalten und die übertragenen Daten enthalten, und um einen Eingang (160), um ein Unterbrechungssignal zu erhalten, das mit einer Unterbrechungsuhr (150) verbunden ist, um insbesondere die Umsetzung der besagten Operationen auszulösen.

5. Kompensator nach Anspruch 3, **dadurch gekennzeichnet, daß** der Wert "m" einen Anfangswert und einen Funktionswert erhalten kann, und daß Mittel zur Konvergenzanalyse vorgesehen sind, um dem Wert "m" den Funktionswert zu geben, wenn eine Konvergenz erkannt wurde, und den Anfangswert, wenn eine Divergenz erkannt wurde.

6. Kompensator nach einem der Ansprüche 1 bis 5, **dadurch gekennzeichnet, daß** er Mittel enthält, um die verschiedenen verfügbaren Signalpegel zu analysieren, um die Parameter der besagten Operationen zu ändern.

7. Kompensator nach Anspruch 6, **dadurch gekennzeichnet, daß** er Mittel zum Erkennen des beiderseitigen enthält, die mit den besagten Mitteln zur Pegelanalyse zusammenarbeiten, um die Entwicklung der Bewertungskoeffizienten zu stoppen, wenn die Signale an den besagten Eingängen einen Störpegel aufweisen.

8. Kompensator nach einem der Ansprüche 6 oder 7, in dem der Besagte Signalprozessor mit einem Eingang zur Signalunterbrechung versehen ist, **dadurch gekennzeichnet, daß** die Pegelanalysen für bestimmte Unterbrechungen vorgenommen werden, ausgelöst auf der Ebene des besagten Signalprozessors.

9. Übertragungssystem mit einer ersten Station (5), über einen Übertragungskanal mit einer zweiten Station (30-32) verbunden, wobei die besagten Stationen aus einem Empfänger und einem Sender gebildet werden, in dem System mindestens eine der Stationen mit einem Echokompensator (1) nach einem der Ansprüche 1 bis 8 ausgerüstet ist.

10. Übertragungsstation, versehen mit einem Sender und einem Empfänger, mit einem Echokompensator (1) nach einem der Ansprüche 1 bis 8 ausgerüstet.

11. Verfahren zur Durchführung der Echokompensation, bei dem das Echo durch die Summe verschiedener durch Bewertungskoeffizienten verzögerter und bewerteter Daten synthetisiert wird, das folgende Schritte enthält:

- Bestimmung eines Fehlersignals zwischen dem reellen Echo und dem synthetisierten Echo,
- Erarbeitung eines Korrelationsausdrucks der Bewertungskoeffizienten, indem man das besagte Fehlersignal eingreifen läßt, **dadurch gekennzeichnet, daß** die besagten Bewertungskoeffizienten um eine Menge korrigiert werden, die über Multiplikation der Korrelation zwischen dem verzögerten Datenwert mit der Differenz zwischen dem Eingangssignal und der Replik erhalten wird.

FIG.1

FIG.2

FIG.3

$C_k = 0$
$k = 0 \ldots N$

$m = \text{FAST}$

$C_k = C_k(1 + 2^{-m} \cdot x_c(k)) + 1\text{LSB}$
$k = 0 \ldots N$

$C_k = C_k(1 - 2^{-m} \cdot x_c(k)) + 1\text{LSB}$
$k = 0 \ldots N$

$x(k) = x(k+1)$
$k = 0 \ldots N+4$
$x_c(k) = x(k+1)$
$k = 0 \ldots N$

cpint = 32

cpint = 0

FIG.5

K0

K1
$$x\,(i) = 0 \qquad i = 0 \ldots N+4$$
$$x_c(i) = 0 \qquad i = 0 \ldots N$$
$$NIVX = NIVRI = NIVRO = 0$$
$$NIX = NIRI = NIRO = 0$$
$$C_k = 0 \qquad\qquad k = 0 \ldots N$$
$$m = FAST$$
$$cpint = cpdiv = 0$$
$$GCOP = 1$$

∗ → ⊛ K2

$$cpint = cpint + 1 \qquad K5$$

$$x\,(0) \qquad K6$$

K7 — $ABS\,(x(4)) > FAC0.NIVX$
$NIVX > -42dBm0$ — "Y" → K10

$$\begin{array}{c} x\,(4) \\ \geq 0 \end{array}$$

N → K11     Y → K12

K8 — $x_c(0) = 0$     $x_c(0) = -1$     $x_c(0) = +1$

$$r'(i) \qquad K15$$

$$RIN \qquad K17$$

$$ROUT = RIN - r'(i) \qquad K20$$

$$ROUT \qquad K22$$

K24
$$NIX = NIX + |x(0)|$$
$$NIRI = NIRI + |RIN|$$
$$NIRO = NIRO + |ROUT|$$

K26
$$GCOP = 0$$
$$|ROUT| > -60dBm0$$
$$|ROUT| > (NIVX - 42dB)$$
$$m = \begin{cases} SLOW \\ FAST \end{cases}$$

FIG.4

FIG. 6